# FASCICULE DE BREVET EUROPEEN

(11) **EP 4 173 254 B1**
(45) Date de publication et mention de la délivrance du brevet: **10.09.2025**
(21) Numéro de dépôt: 21751601.2
(22) Date de dépôt: 23.06.2021
(51) Int. Cl.: H04L 67/54, H04L 67/14

(54) **PROCEDE DE MISE A JOUR D'UN ETAT DE PRESENCE D'UN UTILISATEUR D'UN TERMINAL DE COMMUNICATION POUR UN ENSEMBLE D'APPLICATIONS DE COMMUNICATION**
VERFAHREN ZUR AKTUALISIERUNG EINES PRÄSENZSTATUS EINES BENUTZERS EINES KOMMUNIKATIONSENDGERÄTS FÜR EINEN SATZ VON KOMMUNIKATIONSANWENDUNGEN
METHOD FOR UPDATING A PRESENCE STATUS OF A USER OF A COMMUNICATION TERMINAL FOR A SET OF COMMUNICATION APPLICATIONS

(30) Priorité: 24.06.2020 FR 2006590
(43) Date de publication de la demande: 03.05.2023
(73) Titulaire: Orange, 92130 Issy-les-Moulineaux (FR)
(72) Inventeur: BENRIKHI, Anne, 92326 CHÂTILLON CEDEX (FR); CARBOU, Romain, 92326 CHÂTILLON CEDEX (FR)
(86) Numéro de dépôt international: PCT/FR2021/051154
(87) Numéro de publication internationale: WO 2021/260328

(56) Documents cités:
- WO-A1-03/037007

## Description

### Domaine technique

La présente invention a trait de manière générale au domaine des réseaux de télécommunication, et concerne notamment l'interaction d'un terminal de communication avec des plateformes de réseaux sociaux. L'invention vise en particulier un procédé de mise à jour d'un état de présence d'un utilisateur d'un terminal de communication pour un ensemble d'applications de communication.

### État de la technique

De nos jours, avec le développement croissant des terminaux mobiles de type *smartphone,* ou "téléphone intelligent" et autres tablettes numériques connectées à l'Internet, les utilisateurs communiquent et échangent de plus en plus de messages avec leurs contacts en utilisant notamment des applications de communication appelées couramment "applications de réseaux sociaux", qui incluent en particulier les messageries de type "messagerie instantanée". Pour rappel, une messagerie instantanée (*instant messaging,* en anglais), permet l'échange instantané (c'est-à-dire en temps réel) de messages textuels et de fichiers entre plusieurs personnes par l'intermédiaire de terminaux connectés à un même réseau informatique, le plus souvent l'Internet. Contrairement au courrier électronique, la messagerie instantanée permet de conduire un dialogue interactif, ce qui rend ce type de communication très populaire. Parmi les applications de réseaux sociaux disponibles sur le marché pour les terminaux mobiles, on peut citer par exemple WhatsApp^{™} (Facebook), iMessage^{™} (Apple), Facebook Messenger^{™} (Facebook), ou encore Twitter^{™}.

Chacune des applications de réseau social est installée dans le terminal (de manière native ou par l'utilisateur) et permet au terminal de se connecter à la plateforme de l'application de réseau social via le réseau de communication, tel que l'Internet.

Une caractéristique commune aux applications de réseaux sociaux et en particulier aux messageries instantanées qui leur sont associées est la possibilité offerte à l'utilisateur de renseigner son état de présence, encore désigné par "statut" (*status* en anglais), pour l'application de réseau social considérée. Un tel "statut" de l'utilisateur peut être par exemple : "disponible", "occupé", "déconnecté", "absent", etc. Dans certaines circonstances, c'est l'application elle-même qui met à jour le statut de l'utilisateur, par exemple en lui associant le statut "hors connexion" lorsque le terminal de l'utilisateur n'est pas connecté au réseau de communication.

Il y a des circonstances d'inactivation des interfaces réseaux du terminal dans lesquelles l'utilisateur n'a pas la possibilité de mettre à jour son statut pour l'application de réseau social considérée. C'est par exemple le cas lorsque le terminal se trouve brutalement dans une zone dans laquelle il n'y a pas de couverture réseau, en particulier lorsque l'utilisateur se déplace (en train par exemple) ; c'est également le cas lorsque le terminal s'éteint du fait de l'épuisement de sa batterie.

Par ailleurs, un terminal mobile du type *smartphone* comporte classiquement un certain nombre de contrôles utilisateurs permettant à l'utilisateur de désactiver tout ou partie des interfaces réseaux du terminal ou des services fournis par ces dernières, par exemple la désactivation des données mobiles pour l'interface réseau mobile (réseaux 3G, 4G) pour limiter la consommation électrique du terminal ou la consommation de données facturées, de l'interface Wi-Fi ou de l'interface Bluetooth^{™}, ou de toutes les interfaces réseaux simultanément, c'est-à-dire le passage en "Mode Avion" du terminal.

Lorsque l'utilisateur met en œuvre les contrôles précités du terminal liés notamment à la connexion au réseau Internet via un réseau d'accès mobile (3G, 4G) ou un réseau Wi-Fi, l'utilisateur n'a pas nécessairement le temps ou même l'envie de mettre à jour provisoirement son statut (état de présence) pour chacune des applications de réseau social pour lesquelles il est inscrit. En effet, l'utilisateur devra pour cela se connecter successivement à chacune des plateformes serveur pour ces applications afin de modifier son statut, ce qui est fastidieux. Le document WO 03/037007 A1 décrit une méthode de notification de présence automatique. Il détaille un système qui détecte et communique les changements d'état de présence d'un utilisateur sans son intervention.

La présente invention vise notamment à améliorer la situation exposée ci-dessus.

### Exposé de l'invention

La présente invention propose, selon un premier aspect, un procédé de mise à jour d'un état de présence d'un utilisateur d'un terminal de communication pour un ensemble d'au moins deux applications de communication, le terminal étant connecté à un réseau de communication via au moins une interface réseau.

Le procédé précité est remarquable en ce qu'il comprend les opérations suivantes :
- détection dans le terminal d'un événement fonctionnel dont une conséquence est une désactivation à venir de l'interface réseau ;
- envoi par le terminal à un serveur sur le réseau, appelé "serveur de mise à jour de statut", ledit serveur mémorisant des états de présence associés aux applications de communication respectivement, d'une notification d'événement de désactivation de l'interface réseau, dite "notification d'événement", cette notification d'événement incluant un identifiant de l'utilisateur ;
- suite à la réception de la notification d'événement par le serveur, détermination à partir de l'identifiant de l'utilisateur, pour des applications de communication, des états de présence spécifiques associés aux applications de communication correspondant à l'événement détecté, respectivement ;
- envoi par le serveur, aux plateformes réseau hébergeant les applications de communication respectives, de requêtes de mise à jour des états de présence courant de l'utilisateur pour les applications de communication considérées, avec les états de présence spécifiques pour les applications de communication considérées.

Grâce à un tel procédé, la détection dans le terminal d'un événement - tel que par exemple un passage en Mode Avion, la perte de couverture réseau, ou encore une notification système avertissant que le niveau de la batterie du terminal est inférieur à un certain seuil - déclenche automatiquement dans le terminal l'envoi d'une notification à un serveur sur le réseau ("serveur de mise à jour de statut"), avant la coupure effective de la connexion réseau. Cette notification (notification d'événement) a pour conséquence la mise à jour automatique d'un état de présence courant de l'utilisateur pour chacune des applications de communications supervisées par le serveur précité, par exemple des applications de réseau social, avec un état de présence (encore désigné par "statut") spécifique prédéfini.

Un tel statut spécifique sera choisi au préalable par l'utilisateur afin, par exemple, d'indiquer à ses contacts, pour les applications de communication concernées, qu'il est injoignable pour cause de défaut de connectivité réseau temporaire, mais que tout va bien par ailleurs.

Selon une mise en œuvre particulière du procédé, l'ensemble d'au moins une application de communication comprend au moins deux applications de communication, le serveur déterminant à partir de l'identifiant de l'utilisateur un état de présence spécifique pour chacune des applications de communication, et envoyant à chaque plateforme réseau hébergeant respectivement au moins une des applications de communication, une requête susmentionnée de mise à jour d'un état de présence courant de l'utilisateur pour l'application de communication considérée.

Selon une caractéristique particulière du procédé susmentionné, l'opération de détermination des états de présence spécifiques associés aux applications de communication comprend l'obtention à partir de l'identifiant de l'utilisateur, d'une part d'informations de configuration des états de présence spécifiques correspondant à l'événement détecté, pour chacune des applications de communication, et d'autre part d'informations d'accès aux plateformes réseau hébergeant respectivement les applications de communication.

Ainsi, selon cette caractéristique, le serveur de mise à jour de statut peut centraliser la configuration d'un état de présence spécifique correspondant à l'événement détecté, pour chacune des applications de communication, et d'autre part, les informations permettant d'accéder aux plateformes réseau hébergeant les applications de communication, pour réaliser la mise à jour de l'état de présence.

Selon une caractéristique de réalisation, le procédé comprend en outre une opération de réception par le serveur d'une réponse en provenance de chaque plateforme réseau, indiquant le succès ou l'échec de la mise à jour des états de présence de l'utilisateur pour chacune des applications de communication.

Ainsi, il est possible de disposer d'un historique du résultat (succès ou échec) des mises à jour successives des états de présence pour les applications de communication concernées.

Selon une autre caractéristique de réalisation dépendante de la mise en œuvre de celle exposée ci-dessus, le procédé comprend en outre une opération de transmission du serveur au terminal d'une notification indiquant, pour chacune des applications de communication, le résultat de la mise à jour des états de présence de l'utilisateur.

De cette façon, l'utilisateur pourra être informé, par exemple par une notification s'affichant sur l'écran de son terminal, du résultat de la mise à jour.

Selon un mode de réalisation particulier du procédé, la détection d'un événement fonctionnel inclut la détection d'un événement appartenant au moins à l'ensemble d'événements suivant :
- réception d'une information indiquant que la batterie du terminal est faiblement chargée ;
- réception d'une information indiquant que la couverture réseau est inférieure à un niveau ou seuil défini ;
- exécution d'une commande de désactivation d'une interface réseau ;
- exécution d'une commande de passage du terminal en Mode Avion.

Selon encore d'autres caractéristiques de réalisation du procédé proposé :
- La notification d'événement est envoyée au serveur de mise à jour de statut sous la forme d'une requête utilisant un protocole de type HTTP (*Hypertext Transfer Protocol).*
- Les informations de configuration des états de présence spécifiques pour chacune desdites applications de communication, et les informations d'accès aux plateformes réseau hébergeant respectivement les applications de communication, sont obtenues par le serveur par interrogation d'une base de données incorporée dans le serveur ou accessible par ce dernier via un réseau de communication.
- les applications de communication sont des applications de réseau social dans lesquelles l'utilisateur peut paramétrer un statut de présence.

Corrélativement, selon un deuxième aspect, l'invention a pour objet un terminal de communication comprenant au moins une interface réseau permettant au terminal de se connecter à au moins un réseau de communication. Ce terminal est remarquable en ce qu'il comporte un élément logiciel client conçu pour coopérer à la mise à jour d'un état de présence d'un utilisateur du terminal pour un ensemble d'au moins deux applications de communication.

Cet élément logiciel client comprend :
- un module de détection configuré pour détecter, lorsque le terminal est connecté au réseau de communication, un événement fonctionnel dont une conséquence est une désactivation à venir de l'interface réseau ;
- un module d'envoi configuré pour envoyer à un serveur sur le réseau, appelé "serveur de mise à jour de statut", ledit serveur mémorisant des états de présence associés aux applications de communication respectivement, une notification d'événement de désactivation de l'interface réseau, dite "notification d'événement" ; cette notification d'événement, une fois reçue par le serveur, provoquant l'envoi par ce dernier aux plateformes réseau hébergeant les applications de communication respectives, de requêtes de mise à jour des états de présence courant de l'utilisateur pour les applications de communication, avec les états de présence spécifiques de l'utilisateur correspondant à l'événement fonctionnel détecté.

Selon un troisième aspect, l'invention a pour objet un serveur connecté à un réseau de communication, ce serveur comportant un élément logiciel serveur conçu pour coopérer à la mise à jour d'un état de présence d'au moins un utilisateur d'un terminal de communication pour un ensemble d'au moins deux applications de communication.

L'élément logiciel serveur précité comprend :
- un module de réception de notifications configuré pour recevoir en provenance d'au moins un terminal d'utilisateur des notifications relatives à des événements détectés dans le terminal, ces événements ayant pour conséquence une désactivation à venir d'une interface réseau du terminal, chacune des notifications d'événement reçues incluant un identifiant d'un utilisateur du terminal ;
- un module d'analyse configuré pour, suite à la réception d'une telle notification d'événement, déterminer à partir de l'identifiant de l'utilisateur inclus dans la notification, pour chacune des applications de communication, un état de présence spécifique correspondant à un événement détecté dans le terminal d'utilisateur ;
- un module d'envoi de requêtes configuré pour envoyer, via le réseau à destination des plateformes réseau hébergeant respectivement les applications de communication, une requête de mise à jour des états de présence courant de l'utilisateur pour les applications de communication considérées, avec les états de présence spécifiques pour les applications de communication considérées.

Selon un quatrième aspect, la présente invention a pour objet un système de mise à jour d'un état de présence d'un utilisateur d'un terminal de communication pour un ensemble d'au moins une application de communication, le terminal étant connecté à un réseau de communication via au moins une interface réseau, le système comprenant:
- un terminal de communication tel que brièvement exposé plus haut ; et
- un serveur tel que brièvement exposé plus haut.

Selon enfin un cinquième aspect, la présente invention concerne un élément logiciel incorporé dans un terminal de communication ou dans un serveur tels que brièvement décrits ci-dessus, cet élément logiciel comportant des instructions de programme dont l'exécution par un processeur informatique situé dans le terminal ou le serveur, provoque la mise en œuvre des actions correspondantes d'un procédé de mise à jour d'un état de présence d'un utilisateur pour un ensemble d'au moins une application de communication, tel qu'exposé plus haut.

Un tel élément logiciel peut utiliser n'importe quel langage de programmation, et comprendre un ou plusieurs programmes sous forme de code source, code objet, ou de code intermédiaire entre code source et code objet, tel que dans une forme partiellement compilée, ou dans n'importe quelle autre forme souhaitable.

L'invention vise aussi par conséquent, selon un dernier aspect, un support d'enregistrement d'informations lisible par un ordinateur, sur lequel est stocké un élément logiciel (programme d'ordinateur) tel qu'exposé ci-dessus. Un tel support d'enregistrement peut être constitué par n'importe quel dispositif capable de stocker un tel élément logiciel.

Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un élément logiciel selon l'invention peut être en particulier téléchargé sur un réseau de type Internet.

Les avantages procurés par un terminal de communication, un serveur, un élément logiciel, tels que brièvement définis plus haut, sont identiques ou contribuent à ceux mentionnés plus haut en relation avec le procédé de mise à jour d'un état de présence d'un utilisateur, selon l'invention, et par conséquent ne seront pas rappelés ici.

### Brève description des dessins

D'autres caractéristiques, détails et avantages apparaîtront à la lecture de la description détaillée ci-après, et à l'analyse des dessins annexés, sur lesquels :
- La figure 1 représente un exemple d'environnement de télécommunications dans lequel le procédé selon l'invention peut être est mis en œuvre.
- La figure 2 représente les modules fonctionnels d'un élément logiciel client incorporé dans un terminal de communication selon l'invention.
- La figure 3 représente les modules fonctionnels d'un élément logiciel serveur incorporé dans un serveur de mise à jour de statut, selon l'invention.
- La figure 4 représente sous forme d'organigramme les étapes principales d'un procédé de mise à jour d'un état de présence d'un utilisateur d'un terminal de communication pour un ensemble d'applications de communication, selon l'invention.

### Description détaillée

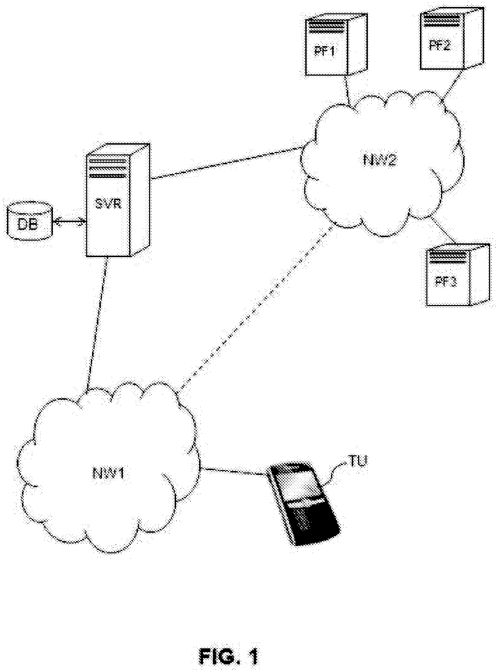

La **figure 1** représente un environnement de télécommunications dans lequel le procédé selon l'invention peut être mis en œuvre. Cet environnement comprend un terminal de communication TU, tel qu'un téléphone mobile de type *smartphone,* d'un utilisateur, relié à un réseau de téléphonie mobile (3G, 4G) non représenté, donnant accès à un premier réseau NW1 de type Internet, auquel est également connecté un serveur SVR, associé à une base de données DB. Le serveur SVR constitue un serveur "de mise à jour de statut d'utilisateur" au sens de la présente invention, et est également connecté à un second réseau NW2, tel qu'un réseau informatique, qui peut être un réseau privé de type intranet, distinct du réseau NW1, ou bien inclus dans ce dernier.

L'environnement de télécommunications représenté à la figure 1 comprend aussi des plateformes réseau PF1, PF2, PF3 (seulement trois représentées à titre d'exemple) hébergeant respectivement une ou plusieurs applications de communication. Les plateformes PF1-PF3 sont ici représentées comme étant connectées au même réseau NW2, cependant chacune de ces plateformes peut être connectée à un réseau distinct de celui auquel sont connectées les autres plateformes. Par ailleurs, le terminal TU peut également se connecter directement au réseau NW2, par exemple pour que l'utilisateur du terminal puisse mettre à jour lui-même son statut d'utilisateur directement auprès de chacune des applications de communication pour lesquelles il a un compte d'utilisateur.

On notera ici que les applications de communication considérées dans le cadre de la présente description, sont essentiellement des applications de communication en ligne, qui offrent la possibilité à l'utilisateur de paramétrer son état de présence (*communication status*) pour indiquer à ses contacts son état de disponibilité pour communiquer. De telles applications sont typiquement les applications de messagerie instantanées telles que WhatsApp^{™}, ou bien plus généralement des applications dites de réseau social en ligne telles que Facebook^{™}, Instagram^{™}, Twitter^{™}.

Dans l'environnement représenté à la figure 1, le principe du procédé de mise à jour d'un état de présence, selon l'invention est le suivant : le terminal mobile TU détecte un événement fonctionnel dont une conséquence est une désactivation à venir d'une interface réseau du terminal, par exemple l'interface réseau mobile ; suite à cette détection, le terminal (TU) envoie au serveur SVR une notification indiquant la prochaine désactivation de son interface réseau ; le serveur SVR reçoit cette notification dite "notification d'événement" et en extrait un identifiant d'utilisateur, par exemple un numéro d'abonné associé au terminal ; le serveur détermine alors pour chaque application d'un ensemble d'applications de communication référencées dans le serveur en correspondance avec l'identifiant d'utilisateur, un état de présence spécifique correspondant à l'événement détecté ; enfin, le serveur SVR envoie à chaque plateforme réseau (PF1-PF3) une requête de mise à jour de l'état de présence de l'utilisateur en cours pour l'application de communication hébergée correspondante, avec l'état de présence spécifique pour cette application de communication.

La mise en œuvre du procédé de mise à jour d'un état de présence, brièvement résumé ci-dessus, repose essentiellement, d'une part, sur un élément logiciel dit "client" incorporé nativement dans le terminal de l'utilisateur ou téléchargé puis installé par ce dernier dans le terminal (dans ce cas, on parlera plutôt d'application) ; et d'autre part, sur un élément logiciel dit "serveur" incorporé dans le serveur SVR. Par ailleurs, l'opérateur ou le fournisseur du service de mise à jour d'état de présence (ou statut utilisateur), décrit ici, devra avoir obtenu préalablement auprès des fournisseurs des applications de communication hébergées par les plateformes (PFi), un accès privilégié afin de pouvoir piloter la mise à jour de statuts d'utilisateurs, auprès des applications de communication correspondantes, à la place des utilisateurs eux-mêmes.

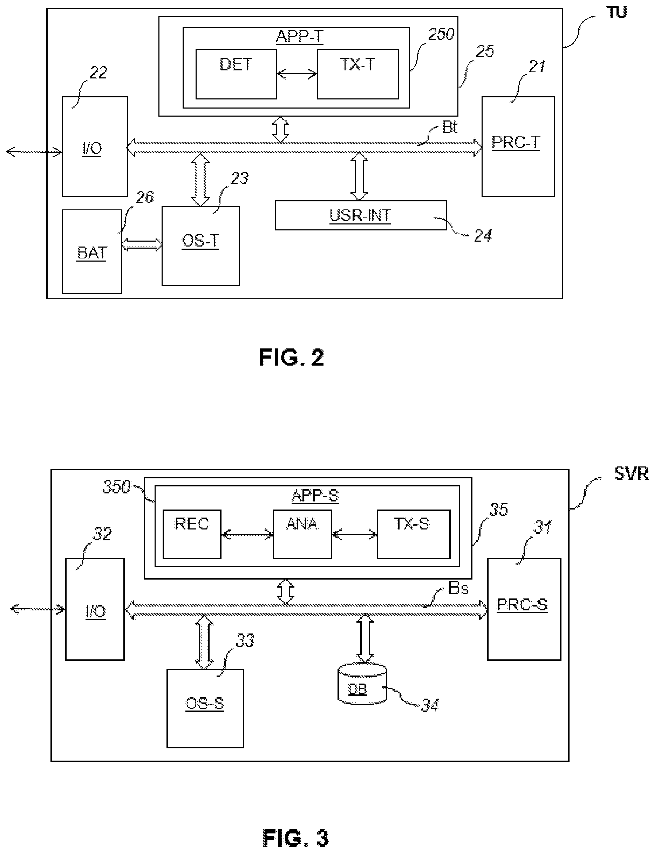

La **figure 2** représente les modules fonctionnels d'un élément logiciel client incorporé dans un terminal de communication selon l'invention. Comme illustré sur la figure 2, le terminal TU est constitué d'éléments agencés selon une architecture matérielle classique d'ordinateur, comprenant notamment un processeur (PRC-T) 21 et une mémoire 25 comprenant des composants mémoire de type ROM et RAM et communiquant par l'intermédiaire d'un ensemble de bus de données (Bt). Le terminal (TU) comprend également une batterie (BAT) 26, dont le niveau de charge peut être communiqué à un module système d'exploitation OS-T (23) du terminal.

D'un point de vue fonctionnel le terminal TU, ici un terminal mobile de type smartphone, inclut en particulier les modules fonctionnels détaillés ci-après :
- Un module I/O (22) d'interface de communication réseau, configuré pour communiquer, via un réseau de téléphone mobile (non représenté) et le réseau NW1 (de type Internet), avec des équipements connectée au réseau NW1 tels que le serveur SVR. À cet effet, le module d'interface réseau 22 peut utiliser divers protocoles de communication tels que par exemple un protocole de type HTTP (*HyperText Transfer Protocol*) ou HTTPS (*HyperText Transfer Protocol Secure*), ou encore SIP (*Session Initiation Protocol*).
- Le module système d'exploitation (OS-T) 23, par exemple le système d'exploitation Android^{™} de la société Google, gérant l'interaction entre les différents modules du terminal et le processeur (PRC-T).
- Un module 24 d'interface utilisateur (USR-INT) associé à un écran d'affichage (non représenté) et le cas échéant à un clavier (tactile ou mécanique) et communiquant avec les différentes applications installées sur le terminal pour présenter graphiquement à l'utilisateur du terminal des données relatives au fonctionnement des applications installées dans le terminal et notamment de l'élément logiciel client selon l'invention.
- L'élément logiciel client (APP-T) 150, enregistré dans la mémoire 25, et comprenant notamment un module de détection (DET) d'un événement fonctionnel tel que défini plus haut, et un module d'envoi (TX-T) d'une notification, telle que définie plus haut, relative à une détection d'événement de désactivation de l'interface réseau 22.
- Un module de temporisation (non représenté) configuré pour déclencher un temporisateur (*timer*) afin de décaler dans le temps une désactivation de l'interface réseau (22) suite à une action volontaire (commande) de l'utilisateur sur le terminal, de sorte à permettre au module d'envoi (TXT-T) de l'élément logiciel client (25) de communiquer avec l'élément logiciel serveur (35) du serveur (SVR) pour commander la mise à jour de l'état de présence de l'utilisateur pour les applications de communication supervisées par le serveur.

La **figure 3** représente les modules fonctionnels d'un élément logiciel serveur incorporé dans un serveur selon l'invention, désigné ici par "serveur de mise à jour de statut". Comme illustré sur la figure 3, le serveur SVR est également constitué d'éléments agencés selon une architecture matérielle classique d'ordinateur, comprenant notamment un processeur (PRC-S) 31 et une mémoire 35 comprenant des composants mémoire de type ROM et RAM et communiquant par l'intermédiaire d'un ensemble de bus de données (Bs).

D'un point de vue fonctionnel le serveur SVR inclut en particulier les modules fonctionnels détaillés ci-après :
- Un module I/O (22) d'interface de communication réseau, configuré pour communiquer, via le réseau NW1 (de type Internet), avec des terminaux d'utilisateurs tels que le terminal TU, et via le réseau NW2 avec des plateformes de service (PFi) hébergeant des applications de communication pour lesquelles un utilisateur peut paramétrer un état de présence (*presence status*)*.* À cet effet, le module d'interface réseau 32 du serveur peut également utiliser divers protocoles de communication tels que par exemple un protocole de type HTTP, HTTPS ou SIP.
- Un module système d'exploitation (OS-S) 33, par exemple le système d'exploitation Linux ou UNIX, gérant l'interaction entre les différents modules du serveur et le processeur (PRC-S).
- Un module base de données (DB) 34 destiné à stocker des informations de configuration d'état de présence spécifique pour chacune des applications de communication dont la mise à jour des statuts d'utilisateurs est gérée par le serveur, et les informations d'accès aux plateformes réseau hébergeant respectivement les applications de communication susmentionnées. Sur la figure 3, la base de données est représentée comme étant un module fonctionnel incorporé dans le serveur, mais selon d'autres modes de réalisation cette base de données peut être incorporée dans un autre équipement réseau accessible par le serveur SVR.
- L'élément logiciel serveur (APP-S) 350, enregistré dans la mémoire 35, et comprenant notamment un module (REC) de réception de notifications d'événement telles que définies plus haut, un module d'analyse (ANA) configuré pour déterminer pour chacune des applications de communication un état de présence spécifique, comme exposé plus haut, et un module d'envoi (TX-S) de requêtes de mise à jour d'état de présence, à destination des plateformes (PFi) de service hébergeant les applications de communication susmentionnées.

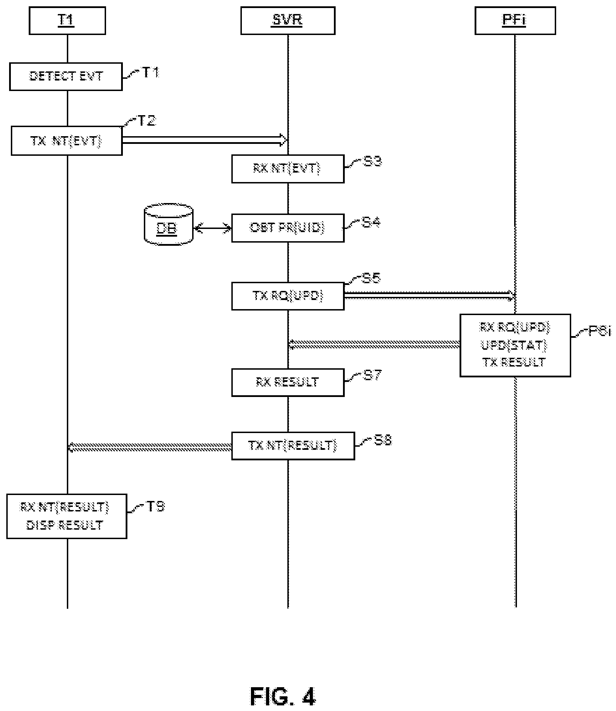

En liaison avec la **figure 4** on va à présent détailler, selon un exemple de mise en œuvre, les étapes principales du procédé de mise à jour d'un état de présence d'un utilisateur d'un terminal de communication pour un ensemble d'applications de communication. Dans cet exemple, le procédé est mis en œuvre dans l'environnement de la figure 1 et par les équipements réseau décrits en relation avec les figures 2 et 3.

Comme représenté sur la figure 4 et en référence à l'environnement de la figure 1, le procédé comprend initialement dans le terminal d'utilisateur TU une action de détection **T1** par le module de détection DET susmentionné d'un événement fonctionnel dont une conséquence est une désactivation prochaine de l'interface réseau (22) du terminal.

Un tel événement peut être indépendant de l'utilisateur, lié par exemple à l'environnement physique du terminal ou à la charge de la batterie du terminal, plus précisément :
- la réception d'une information provenant du système d'exploitation (OS-T) indiquant que le niveau de chargement de la batterie (BAT) du terminal est faible, par exemple qu'il atteint un seuil prédéfini (par exemple inférieur à 10%) ;
- la réception d'une information provenant du système d'exploitation indiquant que la couverture réseau (réseau mobile) devient limitée, par exemple inférieure à seuil prédéfini ou lorsque le réseau 4G devient inaccessible, seul l'accès 3G étant possible.

Un tel événement peut être aussi consécutif à une action volontaire de l'utilisateur sur le terminal, comme par exemple l'exécution d'une commande de désactivation de l'interface réseau, par exemple pour économiser la batterie du terminal ou limiter le nombres de données transmises ou reçues afin de limiter un coût de facturation des données échangées (hors couverture opérateur par exemple) ; une telle commande peut également être une commande de passage du terminal en Mode Avion, en particulier à l'occasion d'un voyage en avion. Dans le cas d'une action volontaire de l'utilisateur sur l'interface réseau du terminal visant à désactiver l'interface réseau, on rappelle ici que l'élément logiciel client du terminal (25) met en œuvre une temporisation afin de décaler dans le temps cette désactivation de sorte à permettre à l'élément logiciel client (25) de communiquer avec l'élément logiciel serveur (35) du serveur (SVR) afin de mettre à jour l'état de présence de l'utilisateur pour les applications de communication supervisées par le serveur.

De retour à la figure 4, suite à l'étape T1 de détection d'un tel événement fonctionnel, le module d'envoi (TX-T) de l'élément client (250) génère et envoie une notification d'événement (NT(EVT)) à destination du serveur SVR au cours de l'étape **T2.** Cette notification est par exemple une requête de type HTTP et inclut un identifiant de l'utilisateur par exemple un identifiant d'abonné au service de mise à jour de statut de présence fourni par le serveur SVR, cet identifiant pouvant être aussi, selon un exemple de réalisation, un numéro de téléphone d'abonné à un réseau mobile d'opérateur, en pratique un numéro MSISDN (*Mobile Station ISDN Number*) stocké dans une carte SIM (*Subscriber Identity Module*) incorporée dans le terminal TU.

À l'étape suivante **S3,** la notification d'événement (NT(EVT)) est reçue par le serveur SVR via le réseau NW1 et plus précisément par le module (REC) de réception de notifications de l'élément serveur (APP-S) 350, puis est analysée, à l'étape **S4,** par le module d'analyse (ANA). À cette fin, le module d'analyse extrait l'identifiant d'utilisateur (UID) contenu dans la notification d'événement et effectue une recherche dans la base de données BD pour obtenir des informations de profil utilisateur (PR(UID)) associé à l'identifiant d'utilisateur extrait.

Selon le mode de réalisation décrit, les informations de profil utilisateur stockées dans la base de données BD avec l'identifiant d'utilisateur comme clé d'entrée, comprennent deux types d'informations : d'une part des informations de configuration d'un état de présence spécifique, correspondant à l'événement détecté, pour chacune des applications de communication supervisées par l'entité serveur (pour l'utilisateur identifié) ; et d'autre part, des informations d'accès aux plateformes réseau hébergeant respectivement les applications de communication.

Les informations de configuration susmentionnées sont des informations préalablement paramétrées par l'utilisateur au cours d'une phase préalable de configuration permettant de définir un état de présence spécifique pour chacune des applications de communication pour lesquelles l'utilisateur est abonné au service selon l'invention. L'objectif de cet "état de présence spécifique" est ainsi de permettre aux contacts de l'utilisateur pour une application de communication considérée d'être informés d'une déconnexion de l'utilisateur de l'application, préalablement à la déconnexion effective en raison d'un événement détecté.

La phase de configuration préalable du service de mise à jour d'état de présence (encore désigné ici par "statut utilisateur") consiste par exemple en une entrée de données via une interface utilisateur dans un fichier de configuration stocké dans la base de données BD.

Cet "état de présence spécifique" qui doit remplacer l'état de présence en cours pour chacune des applications de communication, suite à la détection d'un événement donné dans le terminal de l'utilisateur, pourra être paramétré par l'utilisateur de sorte que cet état de présence soit différent selon l'application de communication considérée (pour le même événement). Par ailleurs, l'état de présence spécifique configuré pour une application de communication donnée peut également varier selon un type d'événement indiqué dans la notification transmise au serveur par le terminal. Ainsi, si l'événement correspond à un niveau de batterie faible, le statut de l'utilisateur pour l'application considérée pourra être par exemple *"déconnecté suite batterie vide"* ; si l'événement correspond à une couverture réseau médiocre, le nouveau statut utilisateur pour cette même application de communication pourra être par exemple *"déconnecté suite perte couverture réseau"* ; si l'événement résulte d'une commande exécutée par l'utilisateur sur le terminal, telle qu'un passage en Mode Avion, le nouveau statut utilisateur pour l'application de communication considérée, pourra être par exemple *"déconnecté suite passage Mode Avion*".

De retour à la figure 4, comme mentionné plus haut, les informations de profil utilisateur recherchées dans la base de données BD avec l'identifiant d'utilisateur comme clé d'entrée, au cours de l'étape S4, contiennent également des informations d'accès aux plateformes réseau hébergeant respectivement les applications de communication. Les informations précitées d'accès aux plateformes hébergeant les applications de communication, sont par exemple constituées d'adresses web (URL - *Uniform Resource Locator*) ou tout autre moyen permettant à un serveur (SVR) offrant un service de mise à jour de statut selon l'invention, d'accéder à distance à un module de gestion d'application de communication, dans une telle plateforme.

Une fois le nouvel état présence déterminé pour chacune des applications de communication, comme expliqué ci-dessus, à l'étape **S5,** l'élément logiciel serveur (250) du serveur SVR envoie par l'intermédiaire de son module d'envoi TX-S, à chaque plateforme réseau (PF1-PF3) hébergeant respectivement une ou plusieurs des applications de communication configurées pour l'utilisateur dans la base de données (BD), une requête (RQ(UPD)) de mise à jour de l'état de présence courant (actuellement actif) pour l'application de communication considérée, avec le nouvel état de présence (état de présence "spécifique") obtenu précédemment (étape S4) par consultation de la base de données BD.

À l'étape **P6i** (i variant de 1 à n, n étant le nombre de plateformes à joindre), les modules de gestion d'application de communication des plateformes reçoivent les requêtes de mise à jour de statut (RQ(UPD)) et déclenchent la mise à jour (UPD(STAT)) de statut utilisateur demandée, puis envoient au serveur SVR (module REC) des messages de réponse (RESULT) indiquant le résultat de la mise à jour de statut demandée (succès ou échec).

Le module REC de l'élément serveur 35 du serveur SVR, reçoit à l'étape **S7,** via le module I/O (32), les réponses de mise à jour (RESULT) en provenance des plateformes PFi et les transmet au module d'analyse (ANA). Selon l'implémentation choisie, le module d'analyse (ANA) pourra être configuré pour déclencher un nouvel envoi de requête de mise à jour à destination d'une plateforme après avoir reçu une réponse indiquant un échec de mise à jour.

À l'étape **S8**, le module d'envoi TX-S de l'élément serveur 35 envoie à destination du terminal TU, pour chaque application de communication dont le changement de statut utilisateur a été demandé, une notification (NT(RESULT)) indiquant le résultat (succès ou échec) de la requête de mise à jour initiale (étape S5).

À l'étape **T9,** si l'interface réseau (I/O) 22 du terminal (TU) n'est pas encore passée à l'état inactif, l'élément logiciel client 250 reçoit les notifications précitées (NT(RESULT)) indiquant le résultat de la mise à jour du statut utilisateur pour les applications de communication concernées, et provoque la communication (DISP(RESULT)) de ces résultats à l'utilisateur au moyen d'une interface utilisateur déterminée. En pratique, selon un exemple de réalisation, ces résultats sont communiqués à l'utilisateur sous la forme de bulles de notifications (désignées par *pop-up notifications ou toasts* en anglais) affichées sur l'écran du terminal.

Grâce au procédé selon l'invention, mis en œuvre selon le mode de réalisation donné à titre d'exemple et décrit ci-dessus, l'utilisateur d'un terminal de communication tel qu'un smartphone pourra définir un statut de présence spécifique pour un certain nombre d'applications de communication - de type messagerie instantanée ou plus généralement de type réseau social - afin d'indiquer en substance, par ce statut spécifique, à ses contacts pour les applications de communication concernées, qu'il est injoignable pour cause de défaut de connectivité réseau temporaire, mais que tout va bien par ailleurs, et cela avant que l'interface réseau du terminal soit désactivée. Le procédé repose sur un élément logiciel client installé dans le terminal utilisateur, nativement ou ultérieurement (sous forme d'application) par l'utilisateur, et sur un élément logiciel serveur équipant un serveur sur un réseau de communication auquel a accès le terminal. Ce serveur dit "de mise à jour de statut" peut ainsi centraliser des informations de configuration d'états de présence spécifiques correspondant à des événements prédéfinis qui sont détectés dans le terminal, pour chacune des applications de communication, et d'autre part, des informations permettant d'accéder aux plateformes réseau hébergeant les applications de communication, pour réaliser la mise à jour des états de présence. Il est par ailleurs possible de disposer dans le serveur d'un historique du résultat (succès ou échec) des mises à jour successives des états de présence pour les applications de communication concernées et d'informer l'utilisateur du terminal, par des notifications transmises par le serveur au terminal, quant au résultat de chaque mise à jour de son état de présence pour les applications de communication supervisées par le serveur pour le compte de l'utilisateur.

## Revendications

1. Procédé de mise à jour d'un état de présence d'un utilisateur d'un terminal de communication pour un ensemble d'au moins deux applications de communication, le terminal étant connecté à un réseau de communication via au moins une interface réseau, le procédé comprenant les actions suivantes :
- détection (T1) dans le terminal d'un événement fonctionnel dont une conséquence est une désactivation à venir de l'interface réseau ;
- envoi (T2) par le terminal à un serveur sur le réseau, appelé "serveur de mise à jour de statut", ledit serveur mémorisant des états de présence associés aux applications de communication respectivement, d'une notification d'événement de désactivation de ladite interface réseau, dite "notification d'événement", ladite notification d'événement incluant un identifiant de l'utilisateur ;
- suite à la réception (S3) de ladite notification d'événement par le serveur, détermination (S4) à partir de l'identifiant de l'utilisateur, pour des applications de communication, des états de présence spécifiques associés aux applications de communication correspondant à l'événement détecté, respectivement ;
- envoi (S5) par le serveur, aux plateformes réseau hébergeant les applications de communication respectives, de requêtes de mise à jour des états de présence courant de l'utilisateur pour les applications de communication considérées, avec les états de présence spécifiques pour les applications de communication considérées.

2. Procédé selon la revendication 1 dans lequel ladite action de détermination (S4) des états de présence spécifiques associés aux applications de communication comprend l'obtention à partir de l'identifiant de l'utilisateur, d'une part d'informations de configuration des états de présence spécifiques correspondant à l'événement détecté, pour chacune desdites applications de communication, et d'autre part d'informations d'accès aux plateformes réseau hébergeant respectivement lesdites applications de communication.

3. Procédé selon l'une des revendications 1 ou 2, comprenant en outre une action de réception (S7) par le serveur d'une réponse en provenance de chaque plateforme réseau, indiquant le succès ou l'échec de la mise à jour (P6) des états de présence de l'utilisateur pour chacune des applications de communication.

4. Procédé selon la revendication 3, comprenant en outre une action de transmission (S8) du serveur au terminal d'une notification indiquant, pour chacune des applications de communication, le résultat de la mise à jour des états de présence de l'utilisateur.

5. Procédé selon l'une quelconque des revendications 1 à 4, dans lequel la détection (T1) d'un événement fonctionnel inclut la détection d'un événement appartenant au moins à l'ensemble d'événements suivant:
- réception d'une information indiquant que la batterie du terminal est faiblement chargée ;
- réception d'une information indiquant que la couverture réseau est inférieure à un niveau ou seuil défini ;
- exécution d'une commande de désactivation de l'interface réseau ;
- exécution d'une commande de passage du terminal en Mode Avion.

6. Procédé selon l'une quelconque des revendications 1 à 5, dans lequel ladite notification d'événement est envoyée (T2) au serveur de mise à jour de statut sous la forme d'une requête utilisant un protocole de type HTTP.

7. Procédé selon l'une quelconque des revendications 2 à 6, dans lequel les informations de configuration des états de présence spécifiques pour chacune desdites applications de communication, et les informations d'accès aux plateformes réseau hébergeant respectivement les applications de communication, sont obtenues (S4) par ledit serveur par interrogation d'une base de données incorporée dans le serveur ou accessible par ce dernier via un réseau de communication.

8. Procédé selon l'une quelconque des revendications 1 à 7, dans lequel lesdites applications de communication sont des applications de réseau social dans lesquelles l'utilisateur peut paramétrer un statut de présence.

9. Terminal de communication comprenant au moins une interface réseau permettant au terminal de se connecter à au moins un réseau de communication, ledit terminal comportant un élément logiciel client conçu pour coopérer à la mise à jour d'un état de présence d'un utilisateur du terminal pour un ensemble d'au moins deux applications de communication, ledit élément logiciel client comprenant :
- un module de détection configuré pour détecter, lorsque le terminal est connecté au réseau de communication, un événement fonctionnel dont une conséquence est une désactivation à venir de l'interface réseau ;
- un module d'envoi configuré pour envoyer à un serveur sur le réseau, appelé "serveur de mise à jour de statut", ledit serveur mémorisant des états de présence associés aux applications de communication respectivement, une notification d'événement de désactivation de ladite interface réseau, dite "notification d'événement" ;
ladite notification d'événement, une fois reçue par ledit serveur, provoquant l'envoi par ce dernier aux plateformes réseau hébergeant les applications de communication respectives, de requêtes de mise à jour des états de présence courant de l'utilisateur pour les applications de communication, avec les états de présence spécifiques de l'utilisateur correspondant à l'événement fonctionnel détecté.

10. Serveur connecté à un réseau de communication, ledit serveur comportant un élément logiciel serveur conçu pour coopérer à la mise à jour d'un état de présence d'au moins un utilisateur d'un terminal de communication pour un ensemble d'au moins deux applications de communication, ledit élément logiciel serveur comprenant :
- un module de réception de notifications configuré pour recevoir en provenance d'au moins un terminal d'utilisateur des notifications relatives à des événements détectés dans le terminal, lesdits événements ayant pour conséquence une désactivation à venir d'une interface réseau du terminal, chacune des notifications d'événement reçues incluant un identifiant d'un utilisateur du terminal ;
- un module d'analyse configuré pour déterminer suite à la réception d'une dite notification d'événement, à partir de l'identifiant de l'utilisateur inclus dans la notification, pour chacune des applications de communication, un état de présence spécifique correspondant à un événement détecté dans le terminal d'utilisateur ;
- un module d'envoi de requêtes configuré pour envoyer, via ledit réseau à destination des plateformes réseau hébergeant respectivement les applications de communication, une requête de mise à jour des états de présence courant de l'utilisateur pour les applications de communication considérées, avec les états de présence spécifiques pour les applications de communication considérées.

11. Système de mise à jour d'un état de présence d'un utilisateur d'un terminal de communication pour un ensemble d'au moins deux applications de communication, le terminal étant connecté à un réseau de communication via au moins une interface réseau, ledit système comprenant :
- un terminal de communication selon la revendication 9 ; et
- un serveur selon la revendication 10.

12. Élément logiciel pour la mise en œuvre d'un procédé de mise à jour d'un état de présence d'un utilisateur d'un terminal de communication pour un ensemble d'au moins deux applications de communication, ledit élément logiciel étant destiné à être installé dans le terminal et comprenant des instructions dont l'exécution par un processeur équipant le terminal provoque la réalisation des actions suivantes :
- détection, lorsque le terminal est connecté à un réseau de communication, d'un événement fonctionnel dont une conséquence est une désactivation à venir d'une interface réseau du terminal ;
- envoi à un serveur sur le réseau, appelé "serveur de mise à jour de statut", ledit serveur mémorisant des états de présence associés aux applications de communication respectivement, d'une notification d'événement de désactivation de ladite interface réseau, dite "notification d'événement" ;
ladite notification d'événement, une fois reçue par ledit serveur, provoquant l'envoi par ce dernier aux plateformes réseau hébergeant les applications de communication respectives, de requêtes de mise à jour des états de présence courant de l'utilisateur pour les applications de communication, avec les états de présence spécifiques de l'utilisateur correspondant à l'événement fonctionnel détecté.

13. Élément logiciel pour la mise en œuvre d'un procédé de mise à jour d'un état de présence d'un utilisateur d'un terminal de communication pour un ensemble d'au moins deux applications de communication, ledit élément logiciel étant destiné à être installé dans un serveur connecté à un réseau de communication et comprenant des instructions dont l'exécution par un processeur équipant le serveur provoque la réalisation des actions suivantes :
- réception en provenance d'au moins un terminal d'utilisateur de notifications relatives à des événements détectés dans le terminal, lesdits événements ayant pour conséquence une désactivation à venir d'une interface réseau du terminal, chacune des notifications d'événement reçues incluant un identifiant d'un utilisateur du terminal ;
- suite à la réception d'une dite notification d'événement, détermination à partir de l'identifiant de l'utilisateur inclus dans la notification, pour chacune des applications de communication, d'un état de présence spécifique correspondant à un événement détecté dans le terminal d'utilisateur ;
- envoi, via ledit réseau à destination des plateformes réseau hébergeant respectivement les applications de communication, d'une requête de mise à jour des états de présence courant de l'utilisateur pour les applications de communication considérées, avec les états de présence spécifiques pour les applications de communication considérées.

## Patentansprüche

1. Verfahren zur Aktualisierung eines Präsenzzustands eines Benutzers eines Kommunikationsendgeräts für einen Satz von mindestens zwei Kommunikationsanwendungen, wobei das Endgerät über mindestens eine Netzwerkschnittstelle mit einem Kommunikationsnetzwerk verbunden ist, wobei das Verfahren die folgenden Vorgänge beinhaltet:
- Erkennen (T1), in dem Endgerät, eines Betriebsereignisses, das eine bevorstehende Deaktivierung der Netzwerkschnittstelle zur Folge hat;
- Senden (T2), durch das Endgerät an einen Server in dem Netzwerk, als "Statusaktualisierungsserver" bezeichnet, wobei der Server jeweils mit den Kommunikationsanwendungen assoziierte Präsenzzustände speichert, einer Ereignisbenachrichtigung über eine Deaktivierung der Netzwerkschnittstelle, als "Ereignisbenachrichtigung" bezeichnet, wobei die Ereignisbenachrichtigung eine Kennung des Benutzers enthält;
- nach dem Empfangen (S3) der Ereignisbenachrichtigung durch den Server, Bestimmen (S4), anhand der Kennung des Benutzers, für Kommunikationsanwendungen, jeweils der mit den Kommunikationsanwendungen assoziierten spezifischen Präsenzzustände, die dem erkannten Ereignis entsprechen;
- Senden (S5), durch den Server, an die Netzwerkplattformen, die die jeweiligen Kommunikationsanwendungen hosten, von Anfragen zur Aktualisierung der aktuellen Präsenzzustände des Benutzers für die betreffenden Kommunikationsanwendungen mit den spezifischen Präsenzzuständen für die betreffenden Kommunikationsanwendungen.

2. Verfahren nach Anspruch 1, wobei der Vorgang des Bestimmens (S4) der mit den Kommunikationsanwendungen assoziierten spezifischen Präsenzzustände das Erhalten, anhand der Kennung des Benutzers, einerseits von Informationen über die Konfiguration der spezifischen Präsenzzustände, die dem erkannten Ereignis entsprechen, für jede der Kommunikationsanwendungen, und andererseits von Informationen über den Zugang zu den Plattformen, die jeweils die Kommunikationsplattformen hosten, beinhaltet.

3. Verfahren nach einem der Ansprüche 1 oder 2, das ferner einen Vorgang des Empfangens (S7), durch den Server, einer Antwort von jeder Netzwerkplattform beinhaltet, die den Erfolg oder das Scheitern der Aktualisierung (P6) der Präsenzzustände des Benutzers für jede der Kommunikationsanwendungen angibt.

4. Verfahren nach Anspruch 3, das ferner einen Vorgang des Übertragens (S8), von dem Server an das Endgerät, einer Benachrichtigung beinhaltet, die für jede der Kommunikationsanwendungen das Ergebnis der Aktualisierung der Präsenzzustände des Benutzers angibt.

5. Verfahren nach einem der Ansprüche 1 bis 4, wobei das Erkennen (T1) eines Betriebsereignisses das Erkennen eines Ereignisses einschließt, das mindestens zu dem folgenden Satz Ereignisse gehört:
- Empfang einer Information, die angibt, dass die Batterie des Endgeräts schwach geladen ist;
- Empfang einer Information, die angibt, dass die Netzwerkabdeckung unter einem definierten Niveau oder Schwellenwert liegt;
- Ausführung eines Befehls zur Deaktivierung der Netzwerkschnittstelle;
- Ausführung eines Befehls für den Übergang des Endgeräts in einen Flugmodus.

6. Verfahren nach einem der Ansprüche 1 bis 5, wobei die Ereignisbenachrichtigung in Form einer Anfrage, die ein Protokoll vom Typ HTTP verwendet, an den Statusaktualisierungsserver gesendet wird (T2).

7. Verfahren nach einem der Ansprüche 2 bis 6, wobei die Informationen über die Konfiguration der spezifischen Präsenzzustände für jede der Kommunikationsanwendungen und die Informationen über den Zugang zu den Netzwerkplattformen, die jeweils die Kommunikationsanwendungen hosten, durch den Server durch das Abfragen einer Datenbank erhalten werden (S4), die in den Server integriert ist oder für diesen über ein Kommunikationsnetzwerk zugänglich ist.

8. Verfahren nach einem der Ansprüche 1 bis 7, wobei die Kommunikationsanwendungen Anwendungen eines sozialen Netzwerks sind, in denen der Benutzer einen Präsenzstatus einstellen kann.

9. Kommunikationsendgerät, das mindestens eine Netzwerkschnittstelle beinhaltet, die es dem Endgerät ermöglicht, sich mit mindestens einem Kommunikationsnetzwerk zu verbinden, wobei das Endgerät ein Client-Softwareelement umfasst, das dazu ausgelegt ist, an der Aktualisierung eines Präsenzzustands eines Benutzers des Endgeräts für einen Satz von mindestens zwei Kommunikationsanwendungen mitzuwirken, wobei das Client-Softwareelement Folgendes beinhaltet:
- ein Erkennungsmodul, das, wenn das Endgerät mit dem Kommunikationsnetzwerk verbunden ist, dazu konfiguriert ist, ein Betriebsereignis zu erkennen, das eine bevorstehende Deaktivierung der Netzwerkschnittstelle zur Folge hat;
- ein Sendemodul, das dazu konfiguriert ist, an einen Server in dem Netzwerk, als "Statusaktualisierungsserver" bezeichnet, wobei der Server jeweils mit den Kommunikationsanwendungen assoziierte Präsenzzustände speichert, eine Ereignisbenachrichtigung über eine Deaktivierung der Netzwerkschnittstelle, als "Ereignisbenachrichtigung" bezeichnet, zu senden;
wobei die Ereignisbenachrichtigung, sobald sie von dem Server empfangen wird, das Senden, durch diesen letzteren an die Netzwerkplattformen, die die jeweiligen Kommunikationsanwendungen hosten, von Anfragen zur Aktualisierung der aktuellen Präsenzzustände des Benutzers für die Kommunikationsanwendungen mit den spezifischen Präsenzzuständen des Benutzers, die dem erkannten Betriebsereignis entsprechen, bewirkt.

10. Server, der mit einem Kommunikationsnetzwerk verbunden ist, wobei der Server ein Server-Softwareelement umfasst, das dazu ausgelegt ist, an der Aktualisierung eines Präsenzzustands mindestens eines Benutzers eines Kommunikationsendgeräts für einen Satz von mindestens zwei Kommunikationsanwendungen mitzuwirken, wobei das Server-Softwareelement Folgendes beinhaltet:
- ein Empfangsmodul für Benachrichtigungen, das dazu konfiguriert ist, von mindestens einem Benutzerendgerät Benachrichtigungen über Ereignisse, die in dem Endgerät erkannt werden, zu empfangen, wobei die Ereignisse eine bevorstehende Deaktivierung einer Netzwerkschnittstelle des Endgeräts zur Folge haben, wobei jede der empfangenen Ereignisbenachrichtigungen eine Kennung eines Benutzers des Endgeräts enthält;
- ein Analysemodul, das dazu konfiguriert ist, nach dem Empfangen einer solchen Ereignisbenachrichtigung anhand der in der Benachrichtigung enthaltenen Kennung des Benutzers für jede der Kommunikationsanwendungen einen spezifischen Präsenzzustand zu bestimmen, der einem in dem Benutzerendgerät erkannten Ereignis entspricht;
- ein Sendemodul für Anfragen, das dazu konfiguriert ist, über das Netzwerk an die Netzwerkplattformen, die jeweils die Kommunikationsanwendungen hosten, eine Anfrage zur Aktualisierung der aktuellen Präsenzzustände des Benutzers für die betreffenden Kommunikationsanwendungen mit den spezifischen Präsenzzuständen für die betreffenden Kommunikationsanwendungen zu senden.

11. System zur Aktualisierung eines Präsenzzustands eines Benutzers eines Kommunikationsendgeräts für einen Satz von mindestens zwei Kommunikationsanwendungen, wobei das Endgerät über mindestens eine Netzwerkschnittstelle mit einem Kommunikationsnetzwerk verbunden ist, wobei das System Folgendes beinhaltet:
- ein Kommunikationsendgerät nach Anspruch 9; und
- einen Server nach Anspruch 10.

12. Softwareelement zur Implementierung eines Verfahrens zur Aktualisierung eines Präsenzzustands eines Benutzers eines Kommunikationsendgeräts für einen Satz von mindestens zwei Kommunikationsanwendungen, wobei das Softwareelement dazu vorgesehen ist, in dem Endgerät installiert zu sein, und Anweisungen beinhaltet, deren Ausführung, durch einen Prozessor, mit dem das Endgerät ausgerüstet ist, die Durchführung der folgenden Vorgänge bewirkt:
- Erkennen, wenn das Endgerät mit einem Kommunikationsnetzwerk verbunden ist, eines Betriebsereignisses, das eine bevorstehende Deaktivierung einer Netzwerkschnittstelle des Endgeräts zur Folge hat;
- Senden, an einen Server in dem Netzwerk, als "Statusaktualisierungsserver" bezeichnet, wobei der Server jeweils mit den Kommunikationsanwendungen assoziierte Präsenzzustände speichert, einer Ereignisbenachrichtigung über eine Deaktivierung der Netzwerkschnittstelle, als "Ereignisbenachrichtigung" bezeichnet;
wobei die Ereignisbenachrichtigung, sobald sie von dem Server empfangen wird, das Senden, durch diesen letzteren an die Netzwerkplattformen, die die jeweiligen Kommunikationsanwendungen hosten, von Anfragen zur Aktualisierung der aktuellen Präsenzzustände des Benutzers für die Kommunikationsanwendungen mit den spezifischen Präsenzzuständen des Benutzers, die dem erkannten Betriebsereignis entsprechen, bewirkt.

13. Softwareelement zur Implementierung eines Verfahrens zur Aktualisierung eines Präsenzzustands eines Benutzers eines Kommunikationsendgeräts für einen Satz von mindestens zwei Kommunikationsanwendungen, wobei das Softwareelement dazu vorgesehen ist, in einem Server, der mit einem Kommunikationsnetzwerk verbunden ist, installiert zu sein, und Anweisungen beinhaltet, deren Ausführung, durch einen Prozessor, mit dem der Server ausgerüstet ist, die Durchführung der folgenden Vorgänge bewirkt:
- Empfangen, von mindestens einem Benutzerendgerät, von Benachrichtigungen über Ereignisse, die in dem Endgerät erkannt werden, wobei die Ereignisse eine bevorstehende Deaktivierung einer Netzwerkschnittstelle des Endgeräts zur Folge haben, wobei jede der empfangenen Ereignisbenachrichtigungen eine Kennung eines Benutzers des Endgeräts enthält;
- nach dem Empfangen einer solchen Ereignisbenachrichtigung, Bestimmen, anhand der in der Benachrichtigung enthaltenen Kennung des Benutzers, für jede der Kommunikationsanwendungen, eines spezifischen Präsenzzustands, der einem in dem Benutzerendgerät erkannten Ereignis entspricht;
- Senden, über das Netzwerk an die Netzwerkplattformen, die jeweils die Kommunikationsanwendungen hosten, einer Anfrage zur Aktualisierung der aktuellen Präsenzzustände des Benutzers für die betreffenden Kommunikationsanwendungen mit den spezifischen Präsenzzuständen für die betreffenden Kommunikationsanwendungen.

## Claims

1. Method for updating a presence status of a user of a communication terminal for a set of at least two communication applications, the terminal being connected to a communication network via at least one network interface, the method comprising the following actions:
- detecting (T1), in the terminal, of a functional event of which a consequence is a future deactivation of the network interface;
- sending (T2), by the terminal to a server on the network, called "status update server", said server storing presence statuses associated with the communication applications, respectively, of a deactivation event notification concerning said network interface, called "event notification", said event notification including an identifier of the user;
- following the reception (S3) of said event notification by the server, determining (S4), based on the identifier of the user, for communication applications, specific presence statuses associated with the communication applications corresponding to the detected event, respectively;
- sending (S5), by the server, to the network platforms hosting the respective communication applications, of requests to update current presence statuses of the user for the communication applications concerned, with the specific presence statuses for the communication applications concerned.

2. Method according to Claim 1, wherein said action of determining (S4) specific presence statuses associated with the communication applications comprises obtaining, based on the identifier of the user, on the one hand, configuration information concerning specific presence statuses corresponding to the detected event, for each of said communication applications, and, on the other hand, information on access to the network platforms respectively hosting said communication applications.

3. Method according to either of Claims 1 and 2, further comprising an action of receiving (S7), by the server, a response from each network platform, indicating the success or failure of the updating (P6) of the presence statuses of the user for each of the communication applications.

4. Method according to Claim 3, further comprising an action of transmitting (S8), from the server to the terminal, a notification indicating, for each of the communication applications, the result of the updating of the presence statuses of the user.

5. Method according to any one of Claims 1 to 4, wherein the detection (T1) of a functional event includes the detection of an event belonging to at least the following set of events:
- reception of information indicating that the battery of the terminal is weakly charged;
- reception of information indicating that the network coverage is below a defined level or threshold;
- execution of a network interface deactivation command;
- execution of a command to switch the terminal to airplane mode.

6. Method according to any one of Claims 1 to 5, wherein said event notification is sent (T2) to the status update server in the form of a request using a protocol of HTTP type.

7. Method according to any one of Claims 2 to 6, wherein the specific presence status configuration information for each of said communication applications, and the information on access to the network platforms respectively hosting the communication applications, are obtained (S4) by said server by the interrogation of a database that is incorporated in the server or that can be accessed by the latter via a communication network.

8. Method according to any one of Claims 1 to 7, wherein said communication applications are social network applications in which the user can parameterize a presence status.

9. Communication terminal comprising at least one network interface allowing the terminal to connect to at least one communication network, said terminal comprising a client software element designed to cooperate in the updating of a presence status of a user of the terminal for a set of at least two communication applications, said client software element comprising:
- a detection module configured to detect, when the terminal is connected to the communication network, a functional event of which a consequence is a future deactivation of the network interface;
- a sending module configured to send, to a server on the network, called "status update server", said server storing presence statuses associated with the communication applications, respectively, a deactivation event notification concerning said network interface, called "event notification";
said event notification, once received by said server, provoking the sending, by the latter to the network platforms hosting the respective communication applications, of requests to update current presence statuses of the user for the communication applications, with the specific presence statuses of the user corresponding to the functional event detected.

10. Server connected to a communication network, said server comprising a server software element designed to cooperate in the updating of a presence status of at least one user of a communication terminal for a set of at least two communication applications, said server software element comprising:
- a notification reception module configured to receive, from at least one user terminal, notifications relating to events detected in the terminal, said events resulting in a future deactivation of a network interface of the terminal, each of the event notifications received including an identifier of a user of the terminal;
- an analysis module configured to determine, following the reception of one said event notification, based on the identifier of the user included in the notification, for each of the communication applications, a specific presence status corresponding to an event detected in the user terminal;
- a request sending module configured to send, via said network to network platforms respectively hosting the communication applications, a request to update current presence statuses of the user for the communication applications concerned, with the specific presence statuses for the communication applications concerned.

11. System for updating a presence status of a user of a communication terminal for a set of at least two communication applications, the terminal being connected to a communication network via at least one network interface, said system comprising:
- a communication terminal according to Claim 9; and
- a server according to Claim 10.

12. Software element for implementing a method for updating a presence status of a user of a communication terminal for a set of at least two communication applications, said software element being intended to be installed in the terminal and comprising instructions, the execution of which by a processor with which the terminal is equipped provokes the performance of the following actions:
- detection, when the terminal is connected to a communication network, of a functional event of which a consequence is a future deactivation of a network interface of the terminal;
- sending, to a server on the network, called "status update server", said server storing presence statuses associated with the communication applications, respectively, of a deactivation event notification concerning said network interface, called "event notification";
said event notification, once received by said server, provoking the sending, by the latter to the network platforms hosting the respective communication applications, of requests to update current presence statuses of the user for the communication applications, with the specific presence statuses of the user corresponding to the functional event detected.

13. Software element for implementing a method for updating a presence status of a user of a communication terminal for a set of at least two communication applications, said software element being intended to be installed in a server connected to a communication network and comprising instructions, the execution of which by a processor with which the server is equipped provokes the performance of the following actions:
- reception, from at least one user terminal, of notifications relating to events detected in the terminal, said events resulting in a future deactivation of a network interface of the terminal, each of the event notifications received including an identifier of a user of the terminal;
- following the reception of one said event notification, determination, based on the identifier of the user included in the notification, for each of the communication applications, of a specific presence status corresponding to an event detected in the user terminal;
- sending, via said network to network platforms respectively hosting the communication applications, of a request to update current presence statuses of the user for the communication applications concerned, with the specific presence statuses for the communication applications concerned.
